(19) Europäisches Patentamt / European Patent Office / Office européen des brevets

(11) **EP 3 837 761 B1**

(12) **FASCICULE DE BREVET EUROPEEN**

(45) Date de publication et mention de la délivrance du brevet:
**02.03.2022 Bulletin 2022/09**

(21) Numéro de dépôt: **19770115.4**

(22) Date de dépôt: **24.09.2019**

(51) Classification Internationale des Brevets (IPC):
***H02P 6/21*** *(2016.01)*

(52) Classification Coopérative des Brevets (CPC):
**H02P 6/21**

(86) Numéro de dépôt international:
**PCT/EP2019/075646**

(87) Numéro de publication internationale:
**WO 2020/064695 (02.04.2020 Gazette 2020/14)**

(54) **PROCEDE DE DEMARRAGE D'UN MOTEUR ELECTRIQUE SYNCHRONE A AIMANTS PERMANENTS**

VERFAHREN ZUM STARTEN EINES PERMANENTMAGNET-SYNCHRONELEKTROMOTORS

METHOD FOR STARTING A PERMANENT MAGNET SYNCHRONOUS ELECTRIC MOTOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.09.2018 FR 1858809**

(43) Date de publication de la demande:
**23.06.2021 Bulletin 2021/25**

(73) Titulaire: **Safran Electrical & Power**
**31702 Blagnac (FR)**

(72) Inventeurs:
- **BOURSE, Wenceslas**
  **31702 BLAGNAC (FR)**
- **TOUTAIN, Pascal, Jacques, Frédéric, Guy**
  **31702 BLAGNAC (FR)**

(74) Mandataire: **Argyma**
**14 Boulevard de Strasbourg**
**31000 Toulouse (FR)**

(56) Documents cités:
**WO-A1-2009/016939     WO-A1-2017/178752**
**FR-A1- 3 028 112**

## Description

## DOMAINE TECHNIQUE GENERAL ET ART ANTERIEUR

La présente invention concerne un procédé de démarrage d'un compresseur, en particulier, pour l'alimentation d'une pile à combustible en oxygène montée dans un aéronef.

Une pile à combustible permet de produire de l'énergie électrique à partir d'une réaction électrochimique entre différents fluides. Une telle pile à combustible est alimentée en dihydrogène et en dioxygène qui réagissent dans la pile à combustible afin de générer de l'énergie électrique. De manière classique, la pile à combustible est alimentée en dioxygène sous la forme d'air fourni par un compresseur.

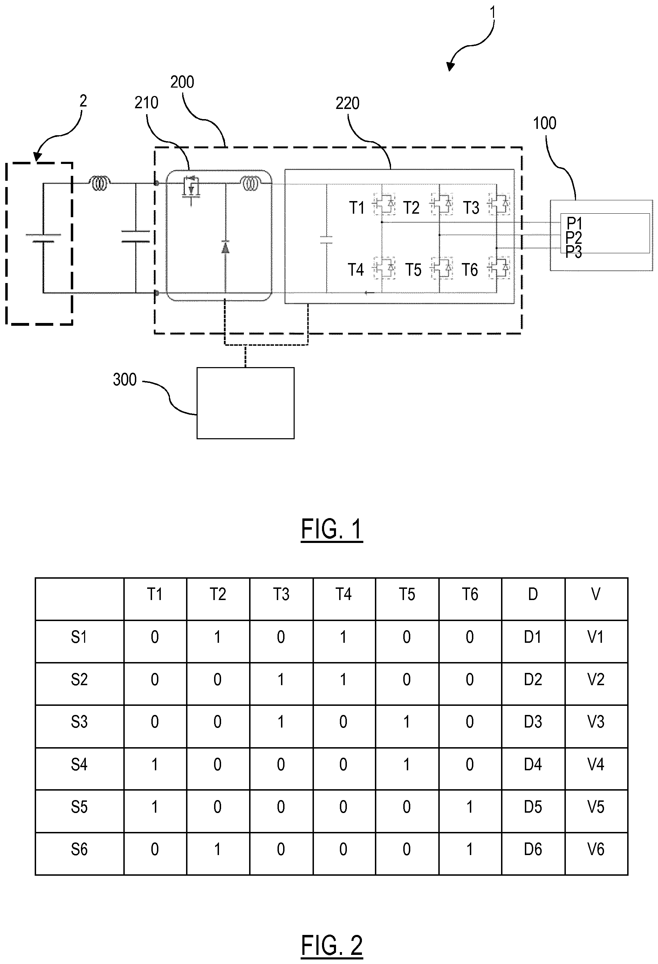

Comme illustré sur la figure 1, un compresseur 1 comprend un moteur 100 synchrone à aimants permanents qui est commandé en vitesse par un circuit de conversion 200 de type « Puise Amplitude Modulation » en langue anglaise. De manière connue, le moteur 100 comporte un rotor et un stator comportant des bobines aptes à générer un champ magnétique en fonction du courant reçu. Dans cet exemple, le moteur 100 comporte trois phases P1, P2, P3 qui sont chacune commandées par le circuit de conversion 200. Les phases P1, P2, P3 sont reliées aux bobines du stator du moteur 100. Afin de commander le moteur 100 à une vitesse très élevée, par exemple, de l'ordre de 170 000 tours/min, le circuit de conversion 200 doit commander les phases P1, P2, P3 du moteur 100 à très haute fréquence, par exemple, de l'ordre de 5,5 KHz.

Un tel circuit de conversion 200 comprend un convertisseur DC-DC 210 et un convertisseur DC-AC 220 qui sont montés en série. Le convertisseur DC-DC 210 est relié, en entrée, à une source d'alimentation 2 et, en sortie, au convertisseur DC-AC 220 afin de lui fournir une tension d'alimentation plus faible que celle fournie par la source d'alimentation 2. Le convertisseur DC-AC 220, également appelé onduleur, comporte une pluralité de transistors T1-T6 qui sont commandés afin de fournir le courant désiré sur chacune des phases P1, P2, P3 du moteur 100. De manière connue, comme illustré à la figure 1, les convertisseurs 210, 220 sont commandés par un calculateur de pilotage 300 afin de piloter de manière précise les phases P1, P2, P3 du moteur 100.

Pour permettre une rotation contrôlée du rotor du moteur 100, le courant circulant dans les bobines du stator doit être piloté précisément en fonction de la position du rotor par rapport au stator. Pour déterminer la position du rotor, plusieurs solutions sont connues de l'art antérieur.

Selon une première solution, il a été proposé par le document WO2017/178752A1 d'installer trois capteurs à effet Hall au niveau du stator du moteur, écartés angulairement de 120°, afin de détecter directement la position du rotor. Cependant, l'installation de tels capteurs est coûteuse et encombrante. En effet, il serait souhaitable de suivre la position du rotor sans ajouter d'équipement au moteur.

Selon une deuxième solution, il été proposé par le document FR3028112A1 de déterminer la position du rotor sans ajout de capteurs à partir de l'observation de la valeur de la force électromotrice du moteur. Cependant, une telle solution ne peut être mise en oeuvre que lors du fonctionnement du moteur en régime continu. Cette solution ne permet malheureusement pas de commander le démarrage du moteur, c'est-à-dire, une phase transitoire. En effet, l'observation de la valeur de la force électromotrice n'est pertinente qu'à partir d'une vitesse de rotation minimale du moteur.

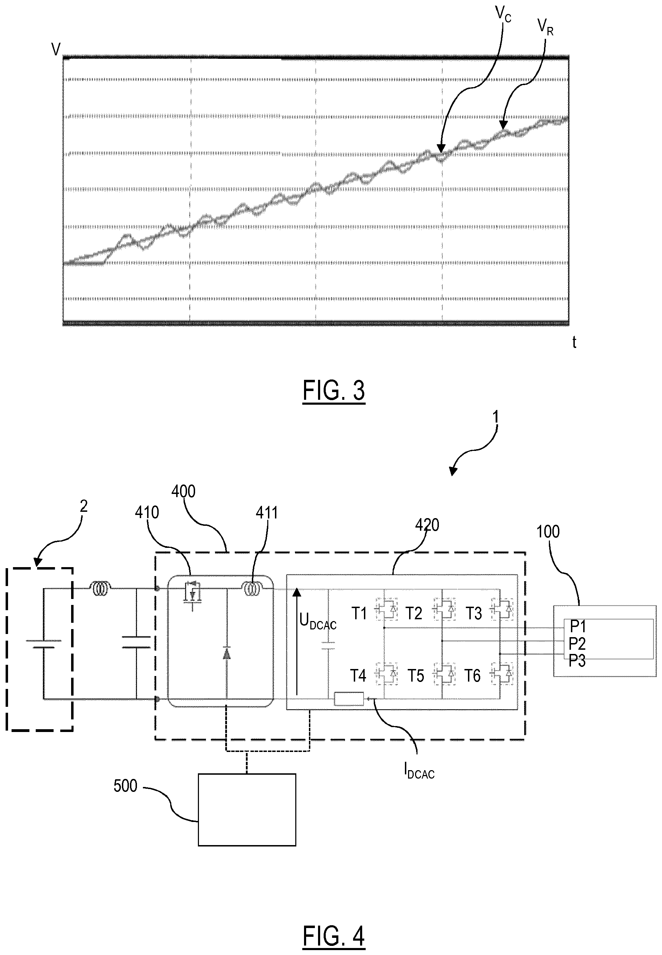

En pratique, pour permettre un démarrage, le calculateur de pilotage 300 comporte une table de pilotage, représentée à la figure 2, définissant une pluralité de phase de commande S1-S6 successives. Chaque phase de commande S1-S6 détermine une commande en courant des phases P1, P2, P3, c'est-à-dire un pilotage des transistors T1-T6 (état bloqué 0 ou passant 1), afin d'imposer une vitesse de consigne prédéterminée V1-V6 pendant une durée déterminée D1-D6. Autrement dit, la table de pilotage définit une rampe d'accélération prédéterminée, représentée sur la figure 3 par la pente linéaire de la vitesse de consigne $V_C$, pour permettre le démarrage du moteur 100. Cependant, une telle solution présente des inconvénients.

En effet, la table de pilotage est théorique et ne prend pas en compte les conditions réelles de fonctionnement du moteur 100, notamment le couple de serrage de paliers ou de roulement du moteur 100 qui varie selon la vitesse de rotation du moteur, la valeur de l'inductance du convertisseur qui fait varier le courant crête, la valeur de la tension délivrée par la source d'alimentation 2 au compresseur 1, la température de fonctionnement du compresseur 1, les tolérances de fabrication du moteur 100, etc. Dans les faits, la vitesse du rotor du moteur 100 ne suit pas la pente linéaire d'accélération mais varie autour de cette rampe d'accélération, ce qui génère des ondulations de la vitesse $V_R$ par rapport à la pente linéaire de vitesse de consigne Vc, comme illustré sur la figure 3 représentant l'évolution de la vitesse V en fonction du temps t. De telles ondulations entraînent des décélérations/accélération répétées du moteur 100 qui augmentent son usure et peuvent empêcher son démarrage.

Pour maximiser les chances de démarrage du moteur 100, le calculateur de pilotage 300 peut majorer la consigne de commande du convertisseur DC-DC 210, ce qui a néanmoins l'inconvénient d'augmenter l'usure des éléments électroniques. Par ailleurs, pour augmenter les chances de démarrage, la pente de la rampe d'accélération peut également être minorée, ce qui a l'inconvénient d'augmenter le temps de démarrage du moteur.

On connaît par ailleurs par la demande de brevet WO2009/016939A1 un dispositif pour démarrer un moteur sans balais. Il enseigne en particulier de modifier la phase d'un angle électrique afin de régler la vitesse. En particulier, il enseigne d'utiliser des données statiques pour corriger la valeur et le timing de la phase électrique. Dans ce document, les données de correction statiques sont issues de courbes théoriques liées aux caractéristiques électriques, mécaniques et environnementales du système complet (moteur électrique et charge électrique). Un tel système ne permet pas de correction dynamique. La demande de brevet WO2009/016939A1 n'enseigne par ailleurs pas de convertisseur DC-DC.

L'invention a donc pour but de remédier à ces inconvénients en proposant un nouveau système et un nouveau procédé de démarrage d'un moteur synchrone à aimants permanents dans un aéronef afin de permettre un démarrage robuste et rapide sans nécessiter d'ajouter des équipements au moteur. Un autre objectif est de limiter les oscillations de vitesse.

Bien que l'invention soit née à l'origine pour résoudre un problème de compresseur pour pile à combustible, l'invention s'applique à tout démarrage de moteur synchrone à aimants permanents.

## PRESENTATION GENERALE DE L'INVENTION

A cet effet, l'invention concerne un procédé de démarrage selon la revendication 1.

Grâce au procédé selon l'invention, le changement de phase de commande est déterminé dynamiquement à partir de la vitesse estimée du moteur et non à partir d'une table prédéterminée. Ceci permet d'optimiser la rampe d'accélération du moteur afin de limiter la durée de démarrage du moteur.

De préférence, la table de pilotage comporte six phases de commande, l'angle seuil prédéterminé étant de 60°. L'angle seuil correspondant ainsi à un sixième de tour du moteur.

De préférence, le procédé comprend une étape automatique de détection d'une décélération du rotor du moteur, la valeur de la constante de correction de vitesse K étant différente de 0 si une décélération du rotor est détectée. De manière préférée, la valeur de la constante de correction de vitesse K est comprise entre 2 et 8%, de préférence de l'ordre 5%, si une décélération du rotor a été détectée. Ceci permet d'adapter la commande du moteur afin de compenser une décélération et ainsi de limiter une telle décélération. La vitesse de consigne est ainsi adaptée de manière automatique.

Selon un aspect de l'invention, une décélération est détectée lorsque le courant $I_{DCAC}$ du convertisseur DC-AC est négatif.

Selon un autre aspect de l'invention, une décélération est détectée lorsque la tension $U_{DCAC}$ du convertisseur DC-AC est croissante au cours du temps.

De préférence encore, l'étape de détection d'une décélération comprend une sous-étape de détection d'une augmentation du courant de phase du moteur au-delà du courant de commande. Ceci permet de détecter aisément une décélération.

L'invention concerne en outre un compresseur pour aéronef selon la revendication 7, ledit compresseur comprenant :

- un moteur électrique synchrone à aimants permanents comprenant un rotor et un stator comportant des bobines reliées respectivement à une pluralités de phases et un circuit de conversion reliant la pluralité de phases à une source d'alimentation électrique afin de commander la rotation du rotor dudit moteur synchrone, ledit circuit de conversion comprenant un convertisseur DC-DC alimentant un convertisseur DC-AC comportant une pluralité de transistors commandables afin de contrôler la rotation du rotor selon une pluralité de phases de commande successives, et
- un calculateur configuré pour mettre en œuvre le procédé tel que décrit précédemment.

De préférence, le compresseur est un compresseur d'alimentation en air d'une pile à combustible.

## PRESENTATION DES FIGURES

L'invention sera mieux comprise à la lecture de la description qui va suivre, donnée uniquement à titre d'exemple, et se référant aux dessins annexés sur lesquels :

- la figure 1 est une représentation schématique d'un circuit de conversion et d'un moteur d'un compresseur selon l'art antérieur (décrit précédemment),
- la figure 2 est une représentation schématique d'une table de pilotage du convertisseur DC-AC du circuit de conversion de la figure 1,
- la figure 3 est une représentation schématique des courbes de la vitesse de consigne Vc et de la vitesse $V_R$ du moteur du compresseur de la figure 1,
- la figure 4 est une représentation schématique d'un circuit de conversion et d'un moteur d'un compresseur selon l'invention,

- la figure 5 est une représentation schématique d'une table de pilotage du convertisseur DC-AC du circuit de conversion de la figure 4,
- la figure 6 est une représentation schématique de l'angle courant pour différentes phases de commande du convertisseur DC-AC de la figure 4,
- la figure 7 est une représentation schématique des étapes de détermination d'un signal de changement de phase Q mises en œuvre par le calculateur,
- la figure 8 est une représentation schématique des étapes de détermination d'un signal de changement de phase Q avec une correction de la vitesse,
- la figure 9 est une représentation schématique d'un premier exemple de détermination d'une constante de correction à partir d'une mesure de tension du convertisseur DC-AC;
- la figure 10 est une représentation schématique d'un deuxième exemple de détermination d'une constante de correction à partir d'une mesure d'intensité du convertisseur DC-AC ;
- la figure 11 est une représentation schématique d'une mise en œuvre du procédé de démarrage du moteur selon l'invention et
- la figure 12 est une représentation schématique de la vitesse estimée $V_E$ du moteur et de la vitesse de consigne Vc avec correction.

Il faut noter que les figures exposent l'invention de manière détaillée pour mettre en œuvre l'invention, lesdites figures pouvant bien entendu servir à mieux définir l'invention le cas échéant.

## DESCRIPTION D'UN OU PLUSIEURS MODES DE REALISATION ET DE MISE EN OEUVRE

L'invention va être présentée pour un moteur de compresseur d'un aéronef. Néanmoins, il va de soi que l'invention s'applique à tout moteur électrique synchrone à aimants permanents.

Une forme de réalisation d'un compresseur 1 selon l'invention est représentée de manière schématique à la figure 4. Dans cet exemple, le compresseur 1 est un compresseur d'alimentation d'une pile à combustible (non représentée). Un tel compresseur 1 est configuré pour fournir de l'air comprenant du dioxygène permettant la réaction électrochimique générant de l'énergie électrique. Cependant, l'invention s'applique à tout type de compresseur d'un aéronef.

Toujours en référence à la figure 4, le compresseur 1 est alimenté en énergie électrique par une source d'alimentation 2. La source d'alimentation 2 est configurée pour fournir de l'énergie électrique au compresseur 1. Le compresseur comprend un moteur 100, un circuit de conversion 400 reliant ledit moteur 100 à la source d'alimentation 2 et un calculateur 500 de commande du circuit de conversion 400.

Le moteur 100 est un moteur électrique synchrone à aimants permanents comprenant un rotor (non représenté) et un stator (non représenté). Le rotor présente une forme cylindrique autour de laquelle s'étend le stator. Le rotor comprend des aimants permanents répartis à la périphérie de la forme cylindrique. Le stator comprend des bobines réparties angulairement autour du rotor. De préférence, le stator comprend trois bobines espacées angulairement les unes des autres de 120°. Le circuit de conversion 400 est configuré pour alimenter les bobines afin que ces dernières génèrent un champ électromagnétique réagissant avec les aimants permanent du rotor afin d'entraîner ce dernier en rotation. Le fonctionnement d'un tel moteur synchrone à aimants permanents étant connu, il ne sera pas décrit plus en détails. Dans l'exemple illustré à la figure 4, le moteur 100 comprend trois bobines. Le moteur 100 est triphasé et est alimenté par un courant électrique comprenant trois phases P1, P2, P3, chaque phase P1, P2, P3 alimentant l'une des bobines.

Le circuit de conversion 400 dirige le courant électrique fourni par la source d'alimentation 2 dans les différentes bobines du moteur 100 afin d'alimenter ces dernières successivement et ainsi permettre la rotation du rotor. Dans ce but, le circuit de conversion 400 comprend un convertisseur DC-DC 410 et un convertisseur DC-AC 420.

Le convertisseur DC-DC 410 est configuré pour être alimenté par la source d'alimentation 2 par une tension dite « entrante ». Le convertisseur DC-DC 410 est configuré pour délivrer une tension dite « sortante » au convertisseur DC-AC 420 dont la valeur est différente de celle de la tension entrante. Le convertisseur DC-DC 410 peut être de type élévateur de tension, également désigné « boost » en langue anglaise, si la valeur de la tension sortante est supérieure à la valeur de la tension entrante, ou bien de type abaisseur de tension, également désigné « buck » en langue anglaise, si la valeur de la tension sortante est inférieure à la valeur de la tension entrante. Dans cet exemple de mise en œuvre, le convertisseur DC-DC 410 est du type abaisseur.

Comme illustré à la figure 4, le convertisseur DC-DC 410 comprend une bobine 411 configurée pour être chargée par la tension entrante. Lorsque la bobine 411 se décharge, elle augmente la valeur de la tension sortante. Le fonctionnement d'un tel convertisseur DC-DC 410 étant connu, il ne sera pas décrit plus en détails. Afin de commander le convertisseur DC-DC 410, le calculateur 500 est configuré pour déterminer la valeur maximale du courant traversant la bobine 411 lorsque celle-ci est chargée. Ceci permet de configurer la charge de la bobine 411 afin d'obtenir une valeur désirée de la tension sortante.

Le convertisseur DC-AC 420, appelé également onduleur, est configuré pour transformer un courant continu en un courant alternatif afin d'alimenter les différentes phases P1-P3 du moteur 100. Le convertisseur DC-AC 420 est configuré pour être alimenté par la source d'alimentation 2 en un courant continu issu du convertisseur DC-DC 410. Le convertisseur DC-AC 420 est configuré pour fournir un courant sur chacune des phases P1-P3 du moteur 100.

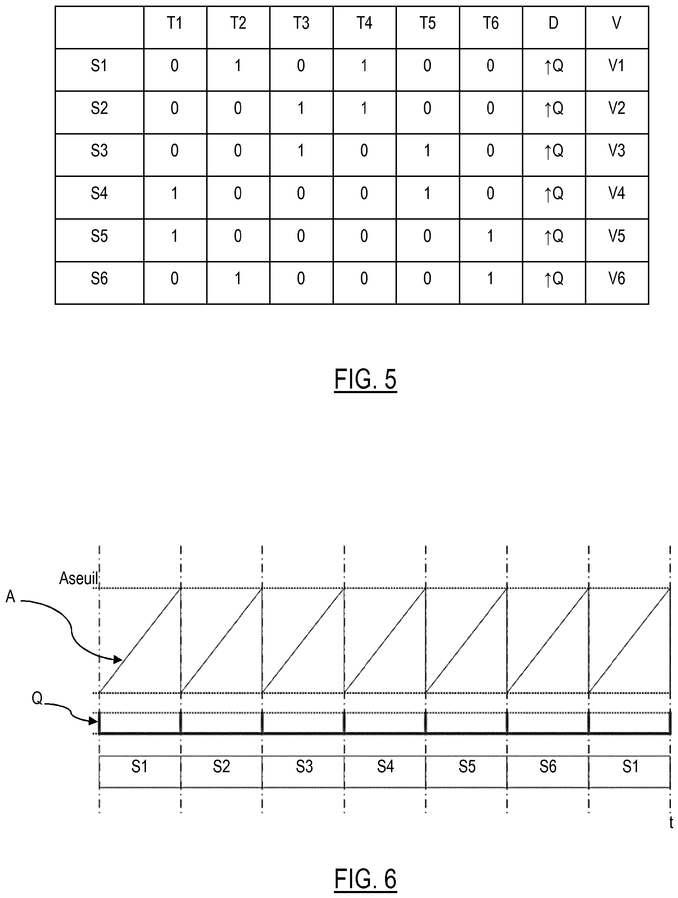

Comme illustré à la figure 4, le convertisseur DC-AC 420 comprend une pluralité de transistors T1-T6 commandables afin d'orienter le courant à travers les différentes bobines. Comme illustré sur la figure 5, l'état de la pluralité de transistors T1-T6 est définie selon la phase de commande S1-S6 dans laquelle ils se trouvent. Autrement dit, pour chaque phase de commande S1-S6, l'état de chacun des transistors T1-T6 est prédéterminé. Ceci permet de déterminer l'alimentation de chaque phase P1-P3 du moteur 100 lors d'une phase de commande S1-S6. Les transistors T1-T6 sont commandés par le calculateur 500 comme cela sera décrit par la suite.

Le calculateur 500 est configuré pour commander, d'une part, le convertisseur DC-DC 410 et, d'autre part, le convertisseur DC-AC 420.Comme indiqué précédemment, le calculateur 500 est configuré pour envoyer un courant de consigne au convertisseur DC-DC 410. Ce courant de consigne détermine le courant maximale traversant la bobine 411 lorsque cette dernière est chargée afin de déterminer la tension sortante désirée.

Le calculateur 500 est également relié électriquement au convertisseur DC-AC 420 afin de commander ce dernier. En particulier, le calculateur 500 commande l'état des transistors T1-T6 à partir de la table illustrée sur la figure 5 selon la phase de commande S1-S6. Dans cette table, la valeur « 0 » correspond à l'état bloqué du transistor et la valeur « 1 » à l'état passant.

Selon l'invention, le calculateur 500 est configuré pour changer de phase de commande S1-S6 en fonction de la valeur d'un angle électrique A. Ainsi, le changement de phase de commande S1-S6 n'est plus réalisé de manière statique par lecture d'une durée prédéterminée dans une table mais de manière dynamique afin de tenir compte des particularités dudit moteur 100.

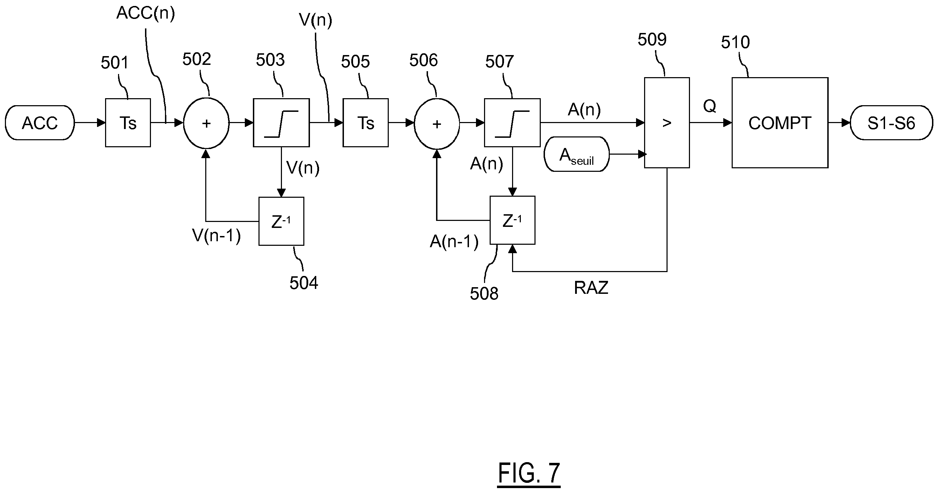

Une première mise en oeuvre d'un procédé de démarrage du moteur 100 est représentée à la figure 7.

Dans cet exemple, le calculateur 500 comporte un échantillonneur 501 configuré pour échantillonner une accélération prédéterminée ACC, stockée en mémoire, selon une constante d'échantillonnage $T_S$ et un additionneur 502 qui permet d'additionner la vitesse précédente V(n-1) afin de déterminer la vitesse courante V(n). Cette accélération prédéterminée ACC est ainsi intégrée afin de déterminer la vitesse. La valeur de cette accélération ACC est définie afin de respecter le temps de démarrage souhaité.

De manière mathématique, cette première phase peut être décrite à partir de l'équation suivante:

$$V(n) = V(n-1) + T_s * ACC$$

dans laquelle :

- *V(n)* est la vitesse électrique courante à l'instant n,
- *V(n - 1)* est la vitesse électrique à l'instant n-1,
- $T_s$ est une constante d'échantillonnage,
- *ACC* est l'accélération prédéterminée.

Toujours en référence à la figure 7, le calculateur 500 comporte un saturateur 503 qui est placé en sortie de l'additionneur 502 afin de borner la vitesse courante V(n). Cette vitesse courante V(n) est transmise à une mémoire 504 qui fournit la vitesse précédente V(n-1) à l'additionneur 502. Au cours de cette première phase, l'accélération prédéterminée ACC est intégrée pour obtenir la vitesse courante V(n).

De manière analogue, le calculateur 500 permet d'intégrer la vitesse courante V(n) pour obtenir l'angle électrique A(n) qui correspond à la position angulaire du rotor.

Aussi, toujours en référence à la figure 7, la vitesse courante V(n) est transmise à un échantillonneur 505 configuré pour échantillonner la vitesse courante V(n) selon une constante d'échantillonnage prédéterminée. Le calculateur 500 comporte en outre un additionneur 506 qui permet d'additionner l'angle électrique précédent A(n-1) afin de déterminer l'angle électrique courant A(n). De manière analogue à précédemment, le calculateur 500 comporte un saturateur 507 placé en sortie de l'additionneur 506 afin de borner la valeur de l'angle électrique courant A(n).

L'angle électrique courant A(n) est transmis à une mémoire 508 qui fournit l'angle précédent A(n-1) à l'additionneur 506 et, d'autre part, à un comparateur 509 configuré pour comparer l'angle courant A(n) à un angle seuil $A_{seuil}$. Lorsque l'angle courant A(n) est supérieur à l'angle seuil $A_{seuil}$, le calculateur 500 émet un signal de changement de phase Q afin de changer de phase de commande S1-S6 et de basculer l'état des transistors T1-T6. Dans cet exemple, le calculateur 500 comporte un compteur 510 afin de compter les signaux de changement de phase Q et ainsi déterminer la phase de commande courante S1-S6.

Dans le cas illustré sur la figure 6 comprenant six phases de commande S1-S6, l'angle seuil A$_{seuil}$ est égal à 60°élec, autrement dit un sixième de tour. Lors du changement de phase Q, la valeur de l'angle courant A est remise à zéro afin de détecter le prochain dépassement de l'angle de seuil A$_{seuil}$ comme illustré à la figure 7.

En référence à la figure 6, il est représenté l'évolution de l'angle courant A au cours du temps exprimé en degré électrique. Dés que l'angle de seuil A$_{seuil}$ est dépassé, l'angle électrique A est remis à zéro et les transistors T1-T6 sont basculés dans la phase de commande S1-S6 suivante. Un tel changement de phase est optimal étant donné qu'il est fonction des caractéristiques intrinsèques du moteur 100. Grâce à l'invention, la position angulaire du rotor est déterminée de manière précise sans nécessiter un outillage supplémentaire du moteur.

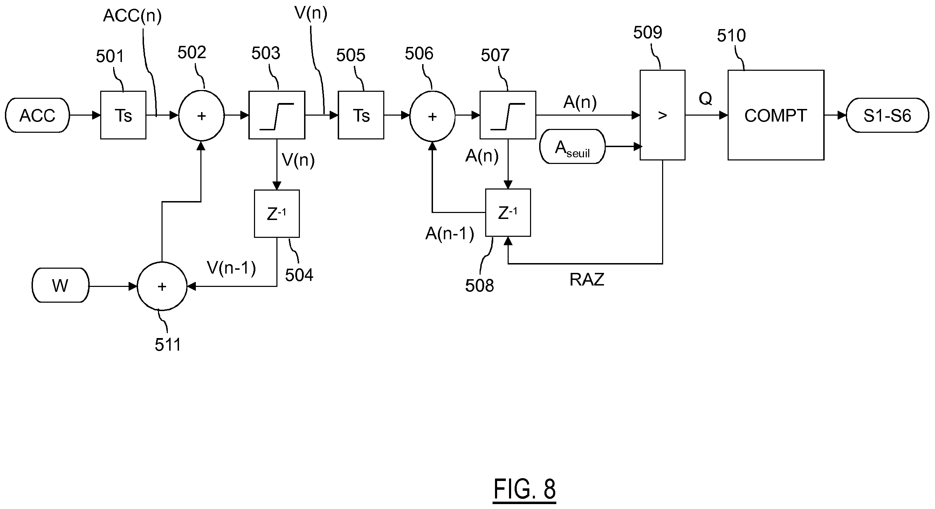

Selon un aspect préféré de l'invention, le calculateur 500 comporte une constante de correction K afin de limiter l'ondulation de la vitesse du moteur 100 autour de la vitesse de consigne déterminée par les phases de commande S1-S6. Dans ce but, en référence à la figure 8, le calculateur 500 comporte un additionneur 511 qui permet d'additionner un paramètre variable W qui est fonction de la constante de correction K et de la vitesse V(n-1).

Avec une correction, la vitesse courante V(n) est définie selon la formule suivante :

$$V(n) = V(n-1) + T_s * ACC + W$$

dans laquelle :

- W est un paramètre variable déterminé à partir de l'équation :

$$W = K * V(n-1)$$

dans laquelle K est la constante de correction de vitesse.

Plusieurs modes de calcul de la constante de correction K vont être dorénavant présentés. Le but est de détecter une décélération de la vitesse du moteur 100 lorsque celui-ci souhaite revenir vers sa vitesse de consigne déterminée par la phase de commande S1-S6. L'utilisation d'une constante de correction K permet d'augmenter la vitesse de consigne et ainsi limiter les décélérations.

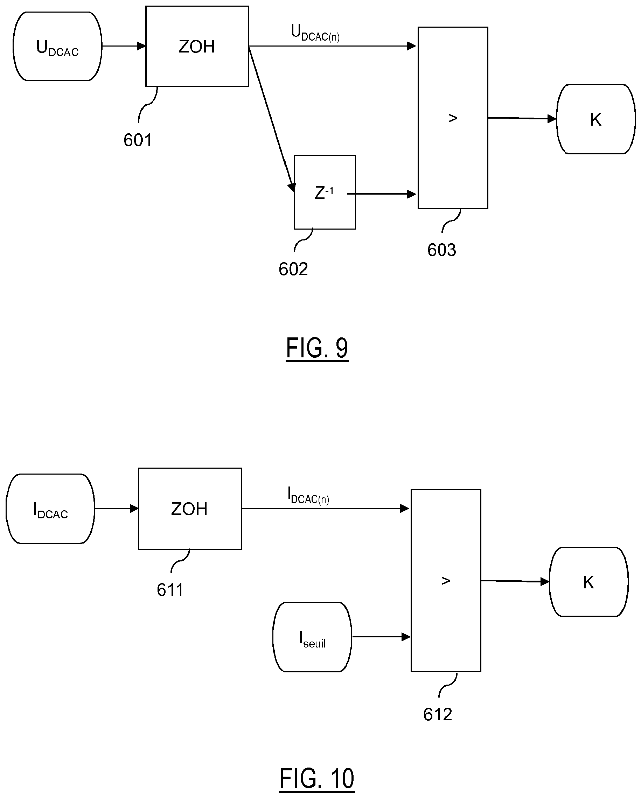

Selon un premier exemple, il est détecté une augmentation de la tension U$_{DCAC}$ dans le convertisseur DC-AC 420. Comme illustré à la figure 9, le calculateur 500 comporte un échantillonneur 601 configuré pour échantillonner la tension U$_{DCAC}$ du convertisseur DC-AC 42 tout en réalisant un décalage du signal de changement de phase Q d'un délai prédéterminé, de préférence de l'ordre de 50 µs. Un tel décalage permet avantageusement de réaliser un échantillonnage au plus proche du maximum de tension. Chaque valeur de la tension U$_{DCAC(n)}$ est ensuite comparée par un comparateur 602 à sa valeur précédente U$_{DCAC(n-1)}$ selon les équations :
Si $U_{DCAC}(n) > U_{DCAC}(n-1) + Hystérésis$ et si $U_{DCAC}(n-1) > U_{DCAC}(n-2) + Hystérésis$, la valeur de la constante de correction de vitesse K est différente de 0, sinon, la valeur de la constante de correction de vitesse K est égale à 0.

De manière préférée, la valeur de constante de correction de vitesse K est validée après analyse de plusieurs échantillons consécutifs pour confirmer l'augmentation de la tension U$_{DCAC}$, en particulier sa valeur maximum au cours d'une phase de fonctionnement S1-S6. En lieu et place d'un échantillonnage pour chaque phase de fonctionnement S1-S6, il pourrait également être mis en œuvre un échantillonnage continu dont la fréquence échantillonnage est suffisamment élevée afin de détecter l'enveloppe de la tension U$_{DCAC}$ et ainsi faciliter la détection de sa valeur maximum.

Selon un deuxième exemple, il est détecté une augmentation de l'intensité I$_{DCAC}$ dans le convertisseur DC-AC 420, c'est-à-dire, le courant entre le condensateur et les bras du convertisseur DC-AC 420 comme illustré à la figure 4.

En référence à la figure 10, de manière analogue à la figure 9, le calculateur 500 est configuré pour échantillonner l'intensité I$_{DCAC}$ du convertisseur DC-AC 420. Chaque valeur d'intensité I$_{DCAC(n)}$ est ensuite comparée à un seuil d'intensité I$_{seuil}$ afin de déterminer la constante de correction K. Dans cet exemple, le seuil d'intensité I$_{seuil}$ est égal à 0. Si l'intensité I$_{DCAC(n)}$ du convertisseur DC-AC 420 est négative, cela signifie que le rotor est en décélération et qu'il faut augmenter la vitesse de consigne. Aussi, si une décélération du rotor est détectée, la valeur de la constante de correction de vitesse K est réglée pour être différente de 0, de préférence comprise entre 2 et 8%, de préférence encore de l'ordre 5%.

Le calculateur 500 est ainsi configuré pour corriger la vitesse de consigne de la rampe d'accélération afin d'optimiser le temps de démarrage du moteur 100. De manière avantageuse, grâce à la correction, l'ondulation de la vitesse du rotor est avantageusement réduite.

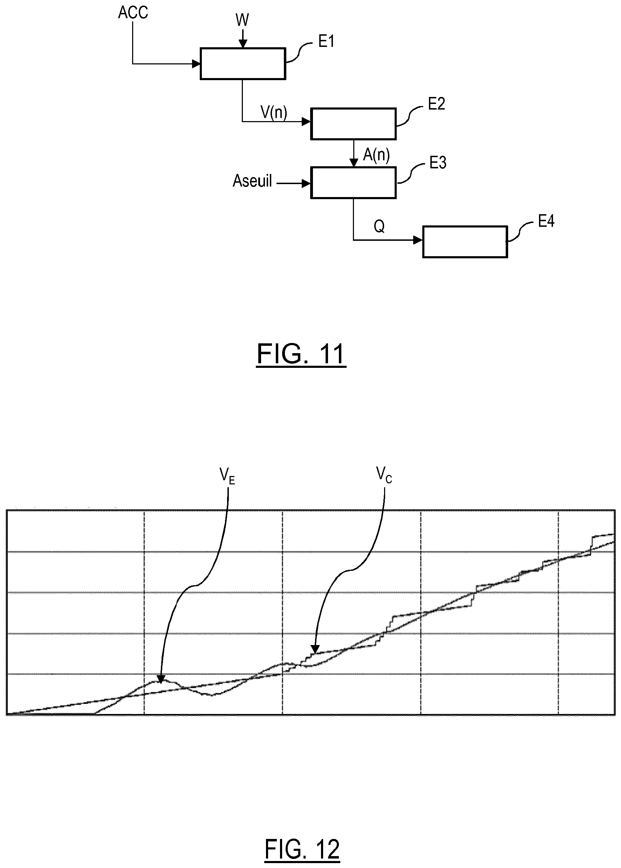

Il va maintenant être décrit une forme de mise en oeuvre du procédé de démarrage d'un moteur synchrone 100 selon l'invention en référence à la figure 11.

Pour entraîner la rotation du moteur 100, le calculateur 500 commande l'état des transistors T1-T6 selon la table de pilotage illustrée sur la figure 5 qui définit les phases de commande S1-S6 successives. L'accélération ACC du rotor du moteur 100 est prédéterminée.

Pour basculer d'une phase de commande S1-S6 à la phase de commande S1-S6 suivante, le calculateur 500 réalise, dans une étape E1, une première intégration simple de l'accélération prédéterminée ACC afin d'en déduire la vitesse courante V(n) à partir de l'équation :

$$V(n) = V(n-1) + T_s * ACC + W$$

De manière préférée, durant cette étape, le calculateur 500 détermine la valeur du paramètre variable W à partir de la détection d'une décélération du moteur 100 par une des méthodes présentées précédemment.

Le calculateur 500 réalise alors, dans une étape E2, une deuxième intégration simple de la vitesse V(n) ainsi déduite afin d'en déduire un angle courant A(n). Le calculateur 500 génère ainsi un signal angulaire A illustré sur la figure 6. Lorsque le signal angulaire A atteint l'angle de seuil prédéterminé $A_{seuil}$, un signal de changement de phase Q est activé dans une étape E3 afin de passer à la phase de fonctionnement suivante S1-S6, ce qui modifie l'état des transistors T1-T6 (Etape E4). L'angle courant A(n) est par ailleurs remis à zéro.

Le calculateur 500 commande ainsi les changements successifs des différentes phases de commande S1-S6 afin de permettre l'accélération du moteur 100 jusqu'à sa vitesse de démarrage.

Grâce au procédé selon l'invention, le changement de phase de commande S1-S6 est déterminé à partir de la vitesse du rotor et non à partir d'une table prédéterminée. Ceci permet d'adapter la rampe d'accélération aux éventuelles décélérations du moteur 10 et ainsi de limiter la durée de démarrage du moteur. Comme illustré à la figure 12, l'augmentation de la vitesse estimée $V_E$ est rapide. De plus, grâce à la correction automatique de la vitesse de consigne Vc, les oscillations sont atténuées de manière importante.

**Revendications**

1. Procédé de démarrage d'un moteur électrique synchrone à aimants permanents (100) comprenant un rotor et un stator comportant des bobines reliées respectivement à une pluralités de phases (P1-P3) et un circuit de conversion (400) reliant la pluralité de phases (P1-P3) à une source d'alimentation électrique (2) afin de commander la rotation du rotor dudit moteur synchrone (100), ledit circuit de conversion (400) comprenant un convertisseur DC-DC (410) alimentant un convertisseur DC-AC (420) comportant une pluralité de transistors (T1-T6) commandables afin de contrôler la rotation du rotor selon une pluralité de phases de commande successives (S1-S6), ledit procédé comprenant:

    ○ une étape de commande des transistors (T1-T6) du convertisseur DC-AC (420) selon une table de pilotage associant chaque phase de commande (S1-S6) à une configuration desdits transistors (T1-T6) de manière à déterminer une rampe d'accélération du rotor du moteur (100),

    **procédé caractérisé par le fait qu'il** comporte :

    ○ une étape de détermination d'un angle électrique A (E1-E2) à partir d'une accélération prédéterminée ACC, l'étape de détermination d'un angle électrique A comportant

        ■ une première étape d'intégration (E1) de l'accélération prédéterminée ACC de manière à en déduire une vitesse V à partir de l'équation suivante :

        •

$$V(n) = V(n-1) + T_s * ACC + K * V(n-1)$$

        • dans laquelle :
        • V(n) est la vitesse électrique V à l'instant n,
        • V(n - 1) est la vitesse électrique V à l'instant n-1,
        • $T_s$ est une constant d'échantillonnage,
        • ACC est l'accélération prédéterminée, et
        • K est une constante de correction de vitesse.

■ une deuxième étape d'intégration (E2) de la vitesse V de manière à en déduire l'angle électrique A. et

◦ une étape de détermination (E3) d'un signal de changement Q de phase de commande (S1-S6) si l'angle électrique A est supérieur à un angle seuil prédéterminé $A_{seuil}$.

**2.** Procédé selon la revendication 1, dans lequel, la table de pilotage comportant six phases de commande (S1-S6), l'angle seuil prédéterminé $A_{seuil}$ est de 60°.

**3.** Procédé selon l'une des revendications 1 à 2, comprenant une étape automatique de détection d'une décélération du rotor du moteur (100), la valeur de la constante de correction de vitesse K étant différente de 0 si une décélération du rotor est détectée.

**4.** Procédé selon la revendication précédente, dans lequel la valeur de la constante de correction de vitesse *K* est comprise entre 2 et 8%, de préférence de l'ordre 5%, si une décélération du rotor a été détectée.

**5.** Procédé selon l'une des revendications 3 à 4, dans lequel une décélération est détectée lorsque le courant $I_{DCAC}$ du convertisseur DC-AC (420) est négatif.

**6.** Procédé selon l'une des revendications 3 à 4, dans lequel une décélération est détectée lorsque la tension $U_{DCAC}$ du convertisseur DC-AC (420) est croissante au cours du temps.

**7.** Compresseur (1) pour aéronef, ledit compresseur (1) comprenant :

- un moteur électrique synchrone à aimants permanents (100) comprenant un rotor et un stator comportant des bobines reliées respectivement à une pluralités de phases (P1-P3) et un circuit de conversion (400) reliant la pluralité de phases (P1-P3) à une source d'alimentation électrique (2) afin de commander la rotation du rotor dudit moteur synchrone (100), ledit circuit de conversion (400) comprenant un convertisseur DC-DC (410) alimentant un convertisseur DC-AC (420) comportant une pluralité de transistors (T1-T6) commandables afin de contrôler la rotation du rotor selon une pluralité de phases de commande successives (S1-S6), et
- un calculateur (500) configuré pour mettre en oeuvre le procédé selon l'une des revendications précédentes.

**Patentansprüche**

**1.** Verfahren zum Starten eines Permanent-Synchronelektromotors (100), umfassend einen Rotor und einen Stator, der Spulen aufweist, die jeweils mit einer Vielzahl von Phasen (P1-P3) verbunden sind, und einen Konvertierungsschaltkreis (400), der die Vielzahl von Phasen (P1-P3) mit einer elektrischen Versorgungsquelle (2) verbindet, um die Rotation des Rotors des Synchronmotors (100) zu steuern, wobei der Konvertierungsschaltkreis (400) einen DC-DC-Wandler (410) umfasst, der einen DC-AC-Wandler (420) versorgt, der eine Vielzahl steuerbarer Transistoren (T1-T6) aufweist, um die Rotation des Rotor gemäß einer Vielzahl aufeinanderfolgender Steuerphasen (S1-S6) zu kontrollieren, wobei das Verfahren umfasst:

◦ einen Schritt des Steuerns der Transistoren (T1-T6) des DC-AC-Wandlers (420) gemäß einer Steuertabelle, die jede Steuerphase (S1-S6) einer Konfiguration der Transistoren (T1-T6) zuordnet, so dass eine Beschleunigungsrampe des Rotors des Motors (100) bestimmt wird,

**wobei das Verfahren dadurch gekennzeichnet ist, dass es aufweist:**

◦ einen Schritt des Bestimmens eines elektrischen Winkels A (E1-E2) ausgehend von einer vorher festgelegten Beschleunigung ACC, wobei der Bestimmungsschritt eines elektrischen Winkels A aufweist

■ einen ersten Integrationsschritt (E1) der vorher festgelegten Beschleunigung ACC, so dass daraus eine Geschwindigkeit V ausgehend von der folgenden Gleichung abgeleitet wird:

• V(n) = V(n - 1) + $T_s$ * ACC + K * V(n - 1)
• wobei
• *V*(n) die elektrische Geschwindigkeit V zum Zeitpunkt n ist,
• *V*(n - 1) die elektrische Geschwindigkeit V zum Zeitpunkt n-1 ist,

• $T_s$ eine Samplingkonstante ist,
• ACC die vorher festgelegte Beschleunigung ist, und
• $K$ eine Geschwindigkeitskorrekturkonstante ist,

▪ einen zweiten Integrationsschritt (E2) der Geschwindigkeit V, so dass daraus der elektrische Winkel A abgeleitet wird, und

o einen Schritt des Bestimmens (E3) eines Wechselsignals Q der Steuerphase (S1-S6), wenn der elektrische Winkel A größer als ein vorher festgelegter Grenzwertwinkel $A_{seuil}$ ist.

2. Verfahren nach Anspruch 1, wobei die Steuertabelle sechs Steuerphasen (S1-S6) umfasst, wobei der vorbestimmte Grenzwertwinkel $A_{seuil}$ 60° beträgt.

3. Verfahren nach einem der Ansprüche 1 bis 2, umfassend einen automatischen Detektionsschritt einer Verzögerung des Rotors des Motors (100), wobei der Wert der Geschwindigkeitskorrekturkonstante K ungleich 0 ist, wenn eine Verzögerung des Rotors festgestellt wird.

4. Verfahren nach vorangehendem Anspruch, wobei der Wert der Geschwindigkeitskorrekturkonstante K zwischen 2 und 8 %, vorzugsweise bei 5 % liegt, wenn eine Verzögerung des Rotors festgestellt wird.

5. Verfahren nach einem der Ansprüche 3 bis 4, wobei eine Verzögerung festgestellt wird, wenn der Strom $I_{DCAC}$ des DC-AC-Wandlers (420) negativ ist.

6. Verfahren nach einem der Ansprüche 3 bis 4, wobei eine Verzögerung festgestellt wird, wenn die Spannung $U_{DCAC}$ des DC-AC-Wandlers (420) im Laufe der Zeit zunimmt.

7. Kompressor (1) für ein Luftfahrzeug, wobei der Kompressor (1) umfasst:

- einen Permanent-Synchronelektromotor (100), umfassend einen Rotor und einen Stator, der Spulen aufweist, die jeweils mit einer Vielzahl von Phasen (P1- P3) verbunden sind, und einen Konvertierungsschaltkreis (400), der die Vielzahl von Phasen (P1-P3) mit einer elektrischen Versorgungsquelle (2) verbindet, um die Rotation des Rotors des Synchronmotors (100) zu steuern, wobei der Konvertierungsschaltkreis (400) einen DC-DC-Wandler (410) umfasst, der einen DC-AC-Wandler (420) versorgt, der eine Vielzahl steuerbarer Transistoren (T1-T6) aufweist, um die Rotation des Rotor gemäß einer Vielzahl aufeinanderfolgender Steuerphasen (S1-S6) zu kontrollieren, und
- einen Rechner (500), der ausgelegt ist, um das Verfahren nach einem der vorangehenden Ansprüche durchzuführen.

**Claims**

1. A method for starting a permanent magnet synchronous electric motor (100) comprising a rotor and a stator comprising coils respectively connected to a plurality of phases (P1-P3) and a conversion circuit (400) connecting the plurality of phases (P1-P3) to a power supply source (2) to control rotation of the rotor of said synchronous motor (100), said conversion circuit (400) comprising a DC-DC converter (410) supplying a DC-AC converter (420) comprising a plurality of transistors (T1-T6) controllable in order to control rotation of the rotor according to a plurality of successive control phases (S1-S6), said method comprising:

° a step of controlling the transistors (S1-S6) of the DC-AC converter (420) according to a driving table associating each control phase (S1-S6) to a configuration of said transistors (T1-T6) so as to determine an acceleration ramp of the rotor of the motor (100),

**which method is characterized in that it comprises:**

◦ a step of determining an electrical angle A (E1-E2) from a predetermined acceleration ACC, the step of determining an electrical angle A comprising

▪ a first step of integrating (E1) the predetermined acceleration ACC so as to derive a speed V from the following equation:

- $V(n) = V(n\text{-}1) + T_s * ACC + K * V(n\text{-}1)$
- where:
- $V(n)$ is the electrical speed V at time instant n
- $V(n\text{ - }1)$ is the electrical speed a time instant n-1,
- $T_s$ is a sampling constant,
- ACC is the predetermined acceleration, and
- K is a speed correction constant.

  ▪ a second step of integrating (E2) the speed V so as to derive the electrical angle A, and

  ○ a step of determining (E3) a control phase (S1-S6) change signal Q if electrical angle A is greater than a predetermined threshold angle $A_{seuil}$.

2. The method according to claim 1, wherein, with the driving table comprising six control phases (S1-S6), the predetermined threshold angle $A_{seuil}$ is 60°.

3. The method according to one of claims 1-2, comprising a step of automatically detecting deceleration of the rotor of the motor (100), the value of the speed correction constant K being different from 0 if deceleration of the rotor is detected.

4. The method according to the preceding claim, wherein the value of the speed correction constant K is between 2 and 8%, preferably in the order of 5%, if deceleration of the rotor has been detected.

5. The method according to one of claims 3-4, wherein deceleration is detected when the current $I_{DCAC}$ of the DC-AC converter (420) is negative.

6. The method according to one of claims 3-4, wherein deceleration is detected when the voltage $U_{DCAC}$ of the DC-AC converter (420) increases over time.

7. A compressor (1) for an aircraft, said compressor (7) comprising:

   - a permanent magnet synchronous electric motor (100) comprising a rotor and a stator comprising coils respectively connected to a plurality of phases (P1-P3) and a conversion circuit (400) connecting the plurality of phases (P1-P3) to a power supply source (2) to control rotation of the rotor of said synchronous motor (100), said conversion circuit (400) comprising a DC-DC converter (410) supplying a DC-AC converter (420) comprising a plurality of transistors (T1-T6) controllable in order to control rotation of the rotor according to a plurality of successive control phases (S1-S6), and
   - a calculator (500) configured to implement the method according to one of the preceding claims.

## FIG. 1

|    | T1 | T2 | T3 | T4 | T5 | T6 | D  | V  |
|----|----|----|----|----|----|----|----|----|
| S1 | 0  | 1  | 0  | 1  | 0  | 0  | D1 | V1 |
| S2 | 0  | 0  | 1  | 1  | 0  | 0  | D2 | V2 |
| S3 | 0  | 0  | 1  | 0  | 1  | 0  | D3 | V3 |
| S4 | 1  | 0  | 0  | 0  | 1  | 0  | D4 | V4 |
| S5 | 1  | 0  | 0  | 0  | 0  | 1  | D5 | V5 |
| S6 | 0  | 1  | 0  | 0  | 0  | 1  | D6 | V6 |

## FIG. 2

FIG. 3

FIG. 4

|     | T1 | T2 | T3 | T4 | T5 | T6 | D    | V   |
| --- | -- | -- | -- | -- | -- | -- | ---- | --- |
| S1  | 0  | 1  | 0  | 1  | 0  | 0  | ↑Q   | V1  |
| S2  | 0  | 0  | 1  | 1  | 0  | 0  | ↑Q   | V2  |
| S3  | 0  | 0  | 1  | 0  | 1  | 0  | ↑Q   | V3  |
| S4  | 1  | 0  | 0  | 0  | 1  | 0  | ↑Q   | V4  |
| S5  | 1  | 0  | 0  | 0  | 0  | 1  | ↑Q   | V5  |
| S6  | 0  | 1  | 0  | 0  | 0  | 1  | ↑Q   | V6  |

## FIG. 5

## FIG. 6

FIG.7

FIG. 8

FIG. 9

FIG. 10

FIG. 11

FIG. 12

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2017178752 A1
- FR 3028112 A1

- WO 2009016939 A1